# EUROPEAN PATENT SPECIFICATION

(11) **EP 0 335 689 B1**
(45) Date of publication and mention of the grant of the patent: **20.09.1995**
(21) Application number: 89303106.2
(22) Date of filing: 29.03.1989
(51) Int. Cl.: G06F 17/00

(54) **Frame processing system capable of expanding and contracting a frame**
Bereichsverarbeitungssystem, geeignet zur Erweiterung oder Einschränkung eines Bereichs
Système de traitement de champs capable d'élargir ou de diminuer un champ

(30) Priority: 29.03.1988 JP 75572/88
(43) Date of publication of application: 04.10.1989
(73) Proprietor: BROTHER KOGYO KABUSHIKI KAISHA, Nagoya-shi, Aichi-ken (JP)
(72) Inventor: Kawakami, Yasushi c/o Brother Kogyo K.K., Nagoya-shi Aichi-ken (JP); Hirata, Keiichi c/o Brother Kogyo K.K., Nagoya-shi Aichi-ken (JP); Miura, Tomoko c/o Brother Kogyo K.K., Nagoya-shi Aichi-ken (JP); Itagaki, Yoshimi c/o Brother Kogyo K.K., Nagoya-shi Aichi-ken (JP); Ban, Tomohiro c/o Brother Kogyo K.K., Nagoya-shi Aichi-ken (JP); Furukawa, Akihiro c/o Brother Kogyo K.K., Nagoya-shi Aichi-ken (JP)
(74) Representative: Senior, Alan Murray

(56) References cited:
- IBM TECHNICAL DISCLOSURE BULLETIN, vol. 27, no. 10B, March 1985, page 6014, Armonk, NY, US; "Cell-width determination in a table"
- IBM TECHNICAL DISCLOSURE BULLETIN, vol. 28, no. 2, July 1985, page 815, Armonk, NY, US; "Method to provide variable heights for spreadsheet cells"
- PATENT ABSTRACTS OF JAPAN, vol. 9, no. 257 (P-396)[1980], 15th October 1985; & JP-A-60 105 076 (HITACHI SEISAKUSHO K.K.) 10-06-1985
- PATENT ABSTRACTS OF JAPAN, vol. 9, no. 207 (P-382)[1930], 24th August 1985; & JP-A-60 68 473 (RICOH K.K.) 19-04-1985
- PATENT ABSTRACTS OF JAPAN, vol. 9, no. 273 (P-401)[1996], 30th October 1985; & JP-A-60 117 377 (RICOH K.K.) 24-06-1985

## Description

The present invention relates to a frame processing system such as a word processor having a display screen on which a frame is displayed, and more particularly to a frame processing system capable of expanding and contracting the frame on the display screen.

In a conventional frame processing system, when a frame displayed on the screen is expanded or contracted, an operator is required to add a line to a frame line constituting the frame or delete a part of the frame line. In the case that inside vertical and horizontal frame lines are formed inside the frame to partition an area inside the frame, such inside vertical and horizontal frame lines are also required to be changed.

There has been proposed in Japanese Patent Laid-open Publication No. 58-40679, for example, a frame processing system wherein vertical and horizontal frame lines constituting a frame can be moved, or the frame itself can be moved. However, this prior art system does not simplify expansion and contraction of the frame. For example, when an operator intends to expand the frame rightwardly, he is required to not only move rightwardly a rightmost vertical frame line but also extend rightwardly upper and lower horizontal frame lines connected to the vertical frame line. In this case, he is further required to precisely move the upper and lower horizontal frame lines so as not to excessively or shortly extend same.

According to the present invention, there is provided a frame processing system capable of expanding and contracting a frame consisting of horizontal and vertical frame lines, the system comprising:
a display device having a screen for displaying said frame;
frame expansion/contraction commanding means responsive to a user for commanding expansion or contraction of said frame;
frame line designating means responsive to a user for designating a frame line to be moved on said screen for expansion or contraction of said frame, comprising a cursor to be displayed on said screen and a cursor key for moving said cursor; and
expansion/contraction processing means for moving the designated frame line in a direction different than the longitudinal direction of said designated frame line without changing the length thereof when a command for expansion or contraction of said frame is supplied from said frame expansion/contraction commanding means to said expansion/contraction processing means, and automatically expanding or contracting other frame lines connected to said designated frame line so as to expand or contract an area inside said frame and adjacent to said designated frame line;
wherein said expansion/contraction processing means comprises a central processing unit, a ROM including a program memory storing a control program which controls expansion and contraction of said frame, and a RAM including a frame line memory means for storing vertical and horizontal frame line data indicative of the position of vertical and horizontal frame lines.

The present invention can provide a frame processing system which can make easy the expansion and contraction of a frame and thereby improve the operability in processing the frame.

The invention will be further described by way of non-limitative example with reference to the accompanying drawings, in which:-
Fig. 1 is a perspective view of the frame processing system of a preferred embodiment according to the present invention;
Fig. 2 is a block diagram of a control circuit for controlling the frame processing system;
Fig. 3 is a schematic illustration of a vertical frame line position memory in the RAM shown in Fig. 2;
Fig. 4 is a schematic illustration of a frame line memory in the RAM shown in Fig. 2;
Fig. 5 is a schematic illustration of an example of framing according to the present invention;
Fig. 6 is a schematic illustration of the vertical frame line position memory in the example shown in Fig. 5;
Fig. 7 is a schematic illustration of the frame line memory in the example shown in Fig. 5;
Fig. 8A is a flowchart of the program for expansion of a frame according to the present invention;
Figs. 8B and 8C are flowcharts of the program for contraction of a frame according to the present invention;
Figs. 9, 10 and 11 are schematic illustrations of various examples of expansion of a frame in the preferred embodiment;
Figs. 12, 13, 14 and 15 are schematic illustrations of various examples of contraction of a frame in the preferred embodiment; and
Figs. 16 and 17 are schematic illustrations of other examples of expansion and contraction of a frame, respectively, according to the present invention.

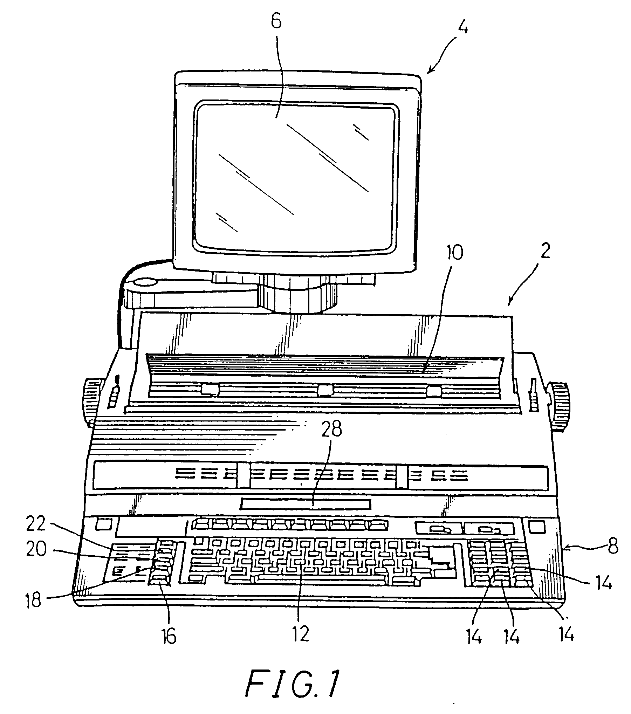

There will now be described a preferred embodiment of the present invention with reference to Figs. 1 to 15. Referring first to Fig. 1, the frame processing system is comprised of an electronic typewriter 2 and a CRT (cathode ray tube) display 4 as the display device of the present invention. Although the electronic typewriter 2 only may be used separately from the CRT display 4 for any purposes other than frame processing, it is utilized as an input device according to the present invention. The CRT display 4 has a screen 6 for displaying a frame, cursor, etc.

As well known, the electronic typewriter 2 is provided with a keyboard 8 as an input section and a printing mechanism 10 as a printer section. The keyboard 8 is provided with character keys 12 such as letter keys, numeral keys and symbol keys, and is also provided with various function keys such as cursor keys 14 for vertically and horizontally moving the cursor displayed on the screen 6, a frame key 16 for setting a framing mode wherein a frame is created, a frame change key 18 for setting a frame change mode wherein the frame is modified, a frame expansion key 20 for commanding expansion of the frame, and a frame contraction key 22 for commanding contraction of the frame.

The printing mechanism 10 is also well known, and details thereof are not shown. Normally, the printing mechanism 10 includes a carriage for mounting a printing head (e.g., a type wheel) which is adapted to be moved along a platen.

The electronic typewriter 2 also includes a liquid crystal display 28 having one or two horizontal lines of data. The liquid crystal display 28 is effected as a display section in the case of using the electronic typewriter 2 only.

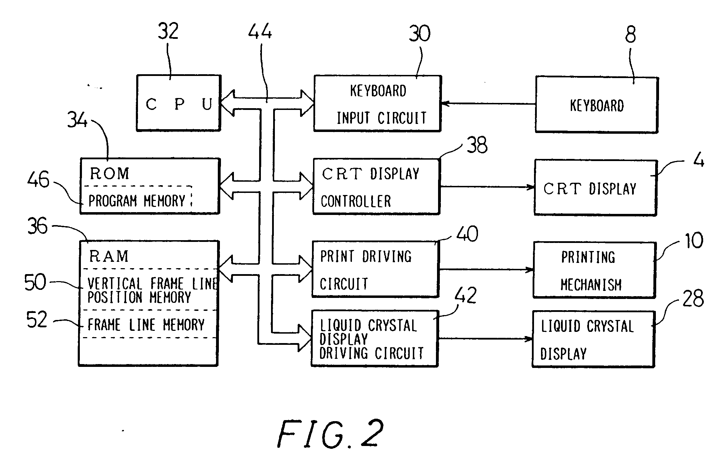

The frame processing system as mentioned above is controlled by a control circuit as shown in Fig. 2. Referring to Fig. 2, the keyboard 8 is connected through a keyboard input circuit 30 to a CPU (central processing unit) 32. The CPU 32 is connected through a common bus line 44 to ROM 34, RAM 36, CRT display controller 38, print driving circuit 40 and liquid crystal display driving circuit 42.

The ROM 34 includes a program memory 46 storing various control programs for controlling the frame processing system, including a program for expansion and contraction of a frame.

The RAM 36 includes a vertical frame line position memory 50 for storing position data of vertical frame lines constituting the frame, and also includes a frame line memory 52 for storing vertical and horizontal frame line data indicative of manners of vertical and horizontal frame lines. The RAM 56 also includes a buffer, register, counter, etc.

The CRT display controller 38 is a unit for displaying a frame and a character on the screen 6, which unit is connected to the CRT display 4.

The print driving circuit 40 controls the printing mechanism 10 according to a carriage moving signal and a type selecting signal inputted from the CPU 32. The liquid crystal display driving circuit 42 controls the liquid crystal display 28.

In the framing mode, outermost frame lines of a desired frame are formed by designating two ends of a diagonal of the frame, and inside vertical and horizontal frame lines inside the frame are formed by moving the cursor.

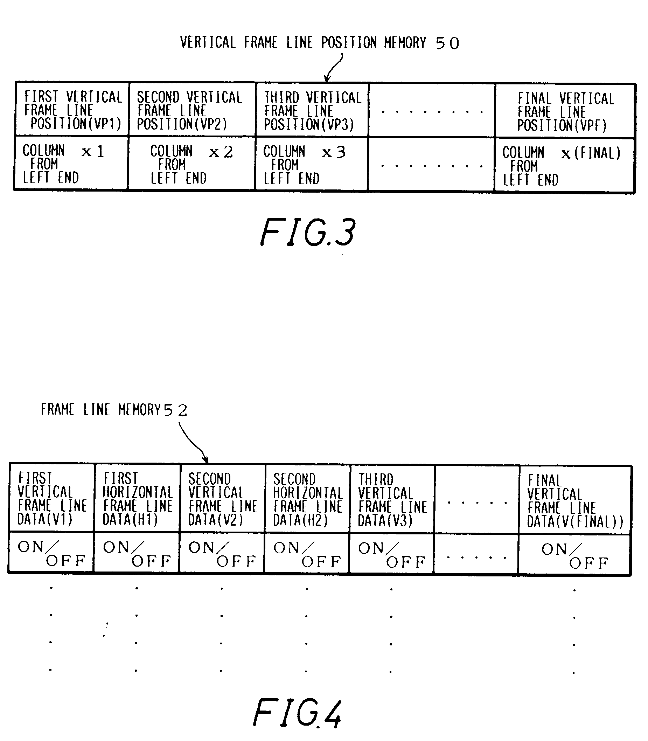

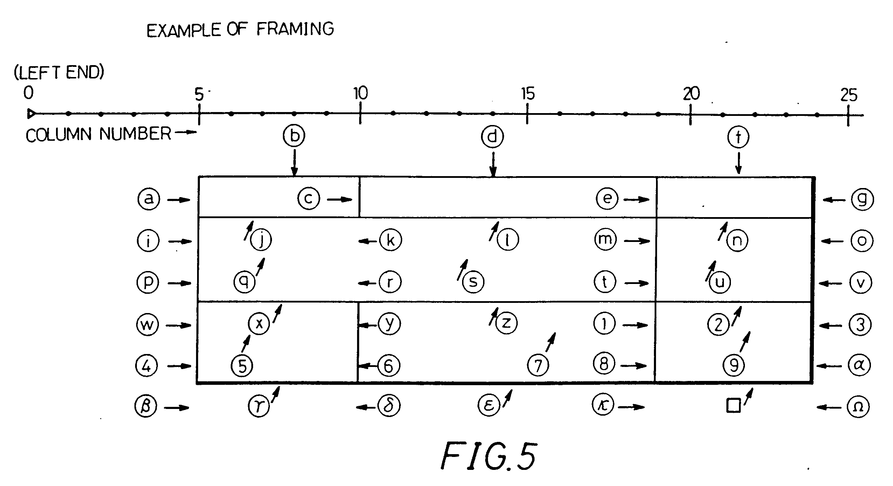

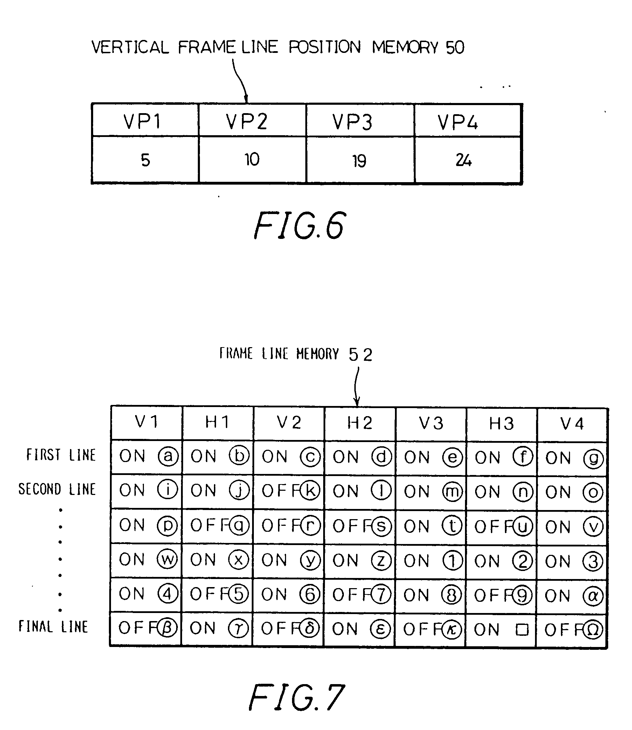

Referring to Fig. 3 which shows a concept of the vertical frame line position memory 50, position data of each vertical frame line of the frame is stored as a column number from a left end column (i.e., column 0) as an absolute origin, wherein one column corresponds to one character. For example, first, second and third vertical frame line position data are stored as columns X1, X2 and X3, respectively, as shown in Fig. 3. Fig. 6 shows the vertical frame line position data of the vertical line position memory 50 in an example of framing shown in Fig. 5. Referring to Fig. 6, the first, second, third and fourth vertical frame line position data are stored as column 5, 10, 19 and 24, respectively.

Referring to Fig. 4 which shows a concept of the frame line memory 52, ON/OFF data of all the vertical frame lines are stored per line, and ON/OFF data of all the horizontal frame lines are stored per line. That is, if a vertical line is present at a vertical frame line position, the data of the vertical frame line is ON, and if absent, the data is OFF. Similarly, if a horizontal line is present in an area between adjacent vertical frame line positions, the data of the horizontal frame line is ON, and if absent, the data is OFF.

For example, referring to Figs. 5 and 7, the first vertical frame line data V1 at the first to fifth lines are all ON, and the data V1 at the final line is OFF. The second vertical frame line data V2 at the first, fourth and fifth lines are ON, and the data V2 at the second, third and final lines are OFF.

On the other hand, as to the first horizontal frame line data H1, since horizontal lines are present between the first and second vertical lines at the first, second, fourth and final lines, the data H1 are ON, and since horizontal lines are absent at the third and fifth lines, the data H1 are OFF. In the same manner, the other frame line data V2, H2, V3, H3 and V4 are stored in the frame line memory 52.

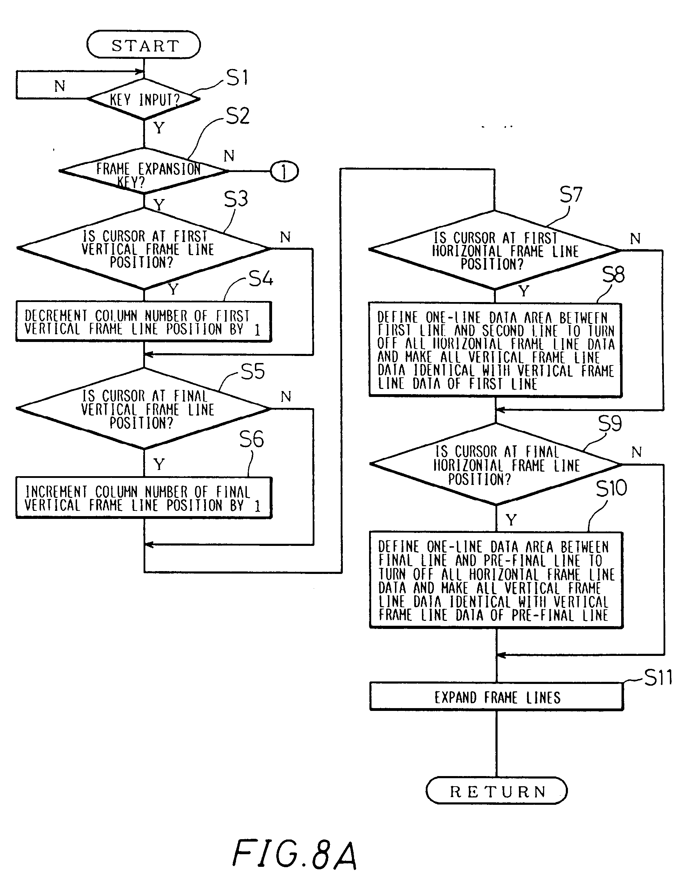

Fig. 8A shows a flowchart of the program for expanding a frame. Before starting the program, a frame line of the frame to be moved for expansion of the frame is designated by a cursor on the screen of the CRT display 4. The designation of the frame line is effected by moving the cursor to a position such that the cursor is located adjacent to the frame line to be moved.

Referring to Fig. 8A, if it is determined in step S2 that the frame expansion key 20 is depressed, the program proceeds to step S3. In step S3, it is determined whether or not the cursor is located at a first vertical frame line position (i.e., a leftmost vertical frame line position). If NO in step S3, the program proceeds to step S5 wherein it is determined whether or not the cursor is located at a final vertical frame line position (i.e., a rightmost vertical frame line position). If NO in step S5, the program proceeds to step S7 wherein it is determined whether or not the cursor is located at a first horizontal frame line (i.e., an uppermost horizontal frame line position). If NO in step S7, the program proceeds to step S9 wherein it is determined whether or not the cursor is located at a final horizontal frame line position (i.e., a lowermost horizontal frame line position). That is, in steps S3, S5, S7 and S9, it is determined what peripheral frame line is designated by the cursor for expansion of the frame.

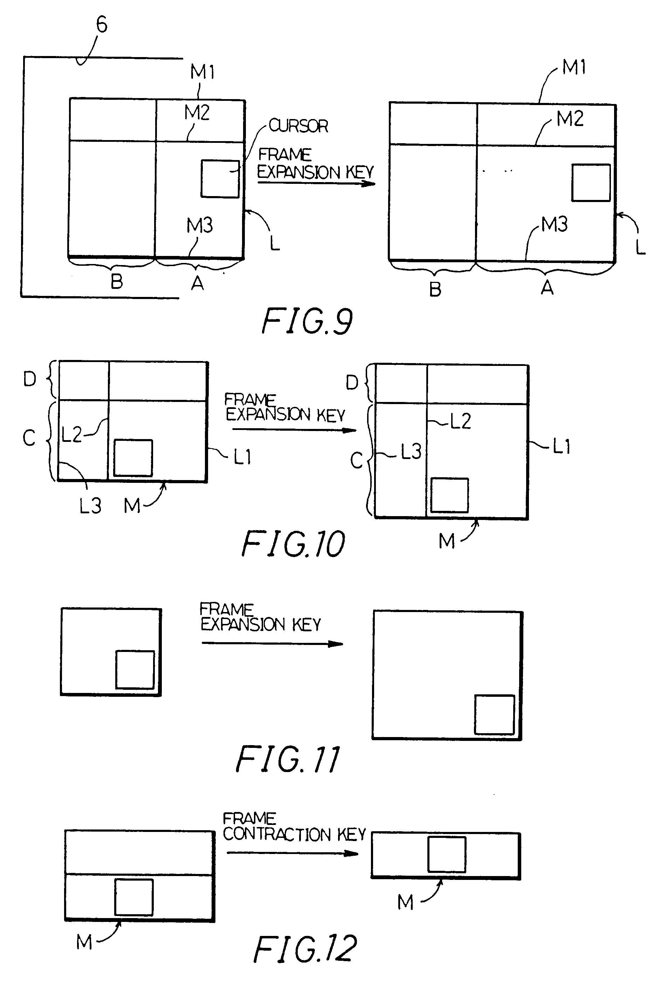

Fig. 9 shows an example of expansion of the frame in the case that a rightmost vertical frame line L is designated by the cursor. In this example, since the answer in step S3 is NO, the program proceeds to step S5. Since the answer in step S5 is YES, the program proceeds to step S6 wherein a column number of the final vertical frame line position stored in the vertical frame line position memory 50 is incremented by 1. That is, referring to the example shown in Fig. 6, the column number of the final (fourth) vertical frame line position is 24, and the column number 24 is incremented by 1 to obtain a column number 25. Thereafter, since the answers in step S7 and S9 are both NO, the frame is expanded rightwardly on the screen 6 of the CRT display 4.

In the above processing, the designated vertical frame line L is moved rightwardly per column in a direction perpendicular to a longitudinal direction of the designated vertical frame line L without changing a length thereof, so that an area A defined by the frame and adjacent to the designated vertical frame line L is expanded rightwardly. In association with the expansion of the area A, horizontal frame lines M1, M2 and M3 connected to the designated vertical frame line L are automatically expanded rightwardly. Moreover, an area B adjacent to the area A and not adjacent to the designated vertical frame line L is not expanded but remains still.

If the first (leftmost) vertical frame line is designated by the cursor, the answer in step S3 is YES to proceed to step S4 wherein a column number of the first vertical frame line position is decremented by 1. Thereafter, since the answers in step S5, S7 and S9 are all NO, the program proceeds to step S11 wherein the frame is expanded leftwardly.

If the final (lowermost) horizontal frame line is designated by the cursor, the answer in step S3, S5 and S7 are all NO, and accordingly the program proceeds to step S9. Since the answer in step S9 is YES, the program proceeds to step S10 wherein a one-line data area is defined between a final line and a pre-final line just before the final line, and all horizontal frame line data of the one-line data area (i.e., an update or current pre-final line) are turned off. Simultaneously, all vertical frame line data are made identical with those of the previous pre-final line.

Fig. 10 shows an example of expansion of the frame in the case that a lowermost horizontal frame line M is designated by the cursor. In this example, the designated horizontal frame line M is moved downwardly per line in a direction perpendicular to a longitudinal direction of the designated horizontal frame line without changing a length thereof, so that an area C defined by the frame and adjacent to the designated horizontal frame line L is expanded downwardly. In association with the expansion of the area C, vertical frame lines L1, L2 and L3 connected to the designated horizontal frame line M are automatically expanded downwardly. Moreover, an area D adjacent to the area C and not adjacent to the designated horizontal frame line M is not expanded but remains still.

Fig. 11 shows an example of expansion of the frame in the case that both the rightmost vertical frame line and the lowermost horizontal frame line are designated by the cursor, that is, the cursor is located at a right lower corner in the frame. In this example, the answer in step S3 is NO, and the program proceeds to step S5. Since the answer in step S5 is YES, the program proceeds to step S6 where one-column rightward expansion processing for the rightmost vertical frame line is executed. Then, since the answer in step S7 is NO, the program proceeds to step S9. Next, since the answer in step S9 is YES, the program proceeds to step S10 wherein one-line downward expansion processing for the lowermost horizontal frame line is executed. As a result, in step S11, both the rightmost vertical frame line and the lowermost horizontal frame line are simultaneously moved rightwardly by one column and downwardly by one line, respectively, thus expanding the frame two-dimensionally.

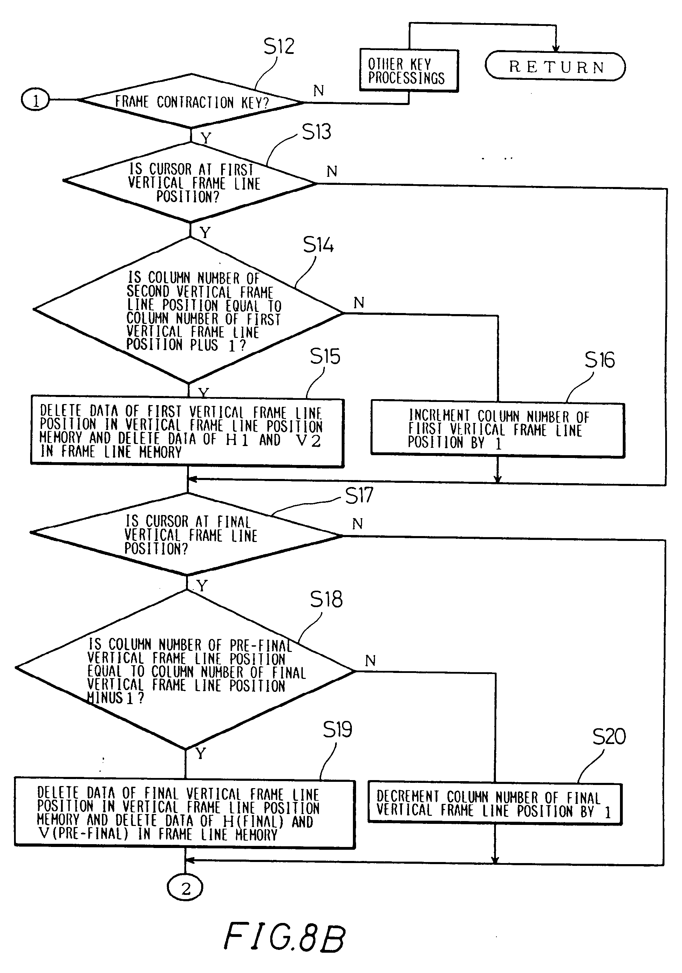

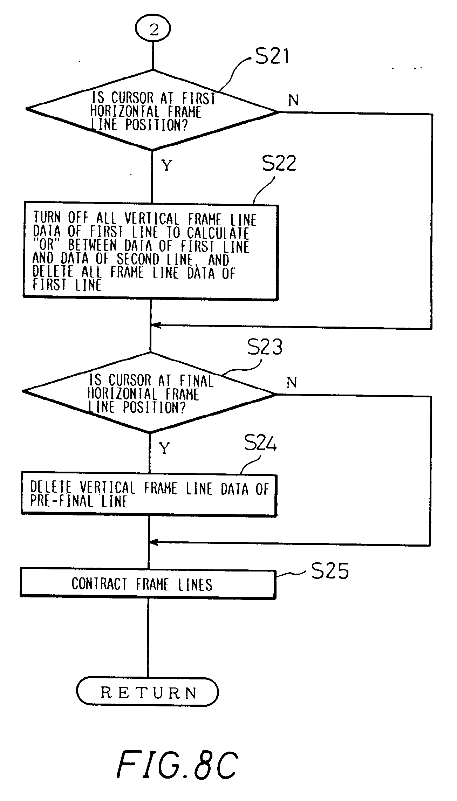

Figs. 8B and 8C show a flowchart of the program for contracting a frame. Before starting the program, a frame line of the frame to be moved for contraction of the frame is designated by the cursor.

In the same manner as in Fig. 8A, it is determined in steps S13, S17, S21 and S23 it is determined what peripheral frame line is designated by the cursor for contraction of the frame.

Fig. 12 shows an example of contraction of the frame in the case that the lowermost horizontal frame line M is designated by the cursor. In this example, the answer in step S2 shown in Fig. 8A is NO, and the program proceeds to step S12 shown in Fig. 8B. Since the answer in step S12 is YES, the program proceeds to step S13. Then, since the answer in step S13 is NO, and the answers in the subsequent steps S17 and S21 are both NO, the program proceeds to step S23. Next, since the answer in step S23 is YES, the program proceeds to step S24 wherein all vertical frame line data of the pre-final line just before the final (lowermost) line are deleted or turned off. For example, referring to Fig. 7, the ON/OFF data of the vertical frame line data V1, V2, V3 and V4 of the pre-final line are all deleted or turned off, and the vertical frame line data of the final line are shifted to the previous pre-final line data. Thereafter, the program proceeds to step S25 wherein the frame is contracted upwardly by one line as shown in Fig. 12.

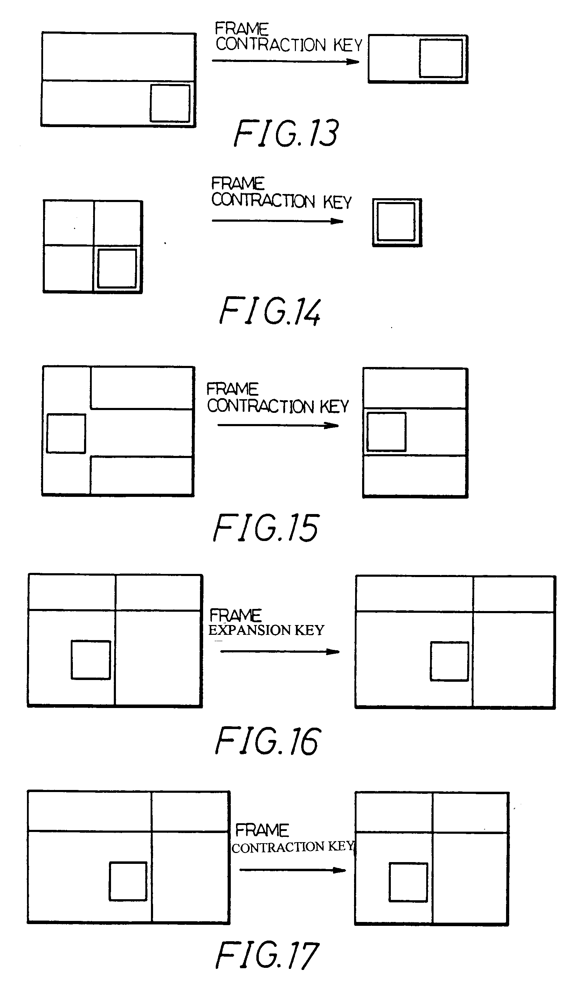

Fig. 15 shows an example of contraction of the frame in the case that the one-column rightward contraction of the frame by the one-column rightward movement of the first (leftmost) vertical frame line results in superimposition between the first vertical frame line and the second vertical frame line. In this example, since the answer in step S13 is YES, the program proceeds to step S14. Then, it is determined in step S14 whether or not the column number of the second vertical frame line position is equal to the column number of the first vertical frame line position plus 1. Since the answer in step S14 is YES in this example, the program proceeds to step S15 wherein the data of the first vertical frame line position in the vertical frame line position memory 50 is deleted, and the data of the first horizontal frame line H1 and the second vertical frame line V2 in the frame line memory 52 are all deleted. For example, referring to Figs. 6 and 7, the column "5" of the first vertical frame line position in the vertical frame line position memory 50 as shown in Fig. 6 is deleted, and all the data H1 and V2 in the frame line memory 52 as shown in Fig. 7 are deleted. Since the data of H1 remains valid, and are substituted for the data of V2. Thereafter, in step S25, the frame is contracted rightwardly by one column as shown in Fig. 15.

If the answer in step S14 is NO, the program proceeds to step S16 wherein the column number of the first vertical frame line position is incremented by 1.

As to steps S17, S18, S19 and S20, substantially the same processings as those in the above-mentioned steps S13, S14, S15 and S16 are executed with the exception that the final (rightmost) vertical frame line rather than the first (leftmost) vertical frame line is designated.

In the case that the first (uppermost) horizontal frame line is designated, the answer in step S21 is YES, and the program proceeds to step S22 where all vertical frame line data of the first line are turned off, and "OR" between data of the first line and data of the second line are calculated to delete all frame line data of the first line. For example, referring to Fig. 7, the vertical frame line data V1, V2, V3 and V4 of the first line are all deleted, and "OR" between all the ON/OFF data of the first line and all the ON/OFF data of the second line are calculated. That is, as all the vertical frame line data of the first line are deleted, the vertical frame line data of the second line remains still. As to the horizontal frame line data of the second line, unless the horizontal frame line data H1, H2 and H3 of the first line and the second line are both OFF, the horizontal frame line data of the second line are changed into ON. Then, the horizontal frame line data of the first line are deleted. Thereafter, the program skips step S24 to proceed to step S25 wherein the frame is contracted downwardly.

Fig. 13 shows an example of contraction of the frame in the case that the cursor is located at a right lower corner in the frame. In this example, since the answer in step S17 is YES, and the answer in step S18 is NO, the step S20 is executed, and since the answer in step S23 is YES, the step S24 is executed. As a result, the execution of step S25 results in a manner of contraction as shown in Fig. 13.

Similarly, in an example shown in Fig. 14, since the answer in step S18 is YES, the step S19 is executed, and since the answer in step S23 is YES, the step S24 is executed. As a result, the execution of step S25 results in a manner of contraction as shown in Fig. 14.

As shown in Figs. 13 and 14, the vertical and horizontal frame lines are leftwardly by one column and upwardly by one line simultaneously, thus contracting the frame two-dimensionally.

The frame line designating means in the above-mentioned preferred embodiment is constituted of the cursor to be displayed on the CRT display 4, the cursor keys 14 for moving the cursor, and the CPU 32 for executing the processing for designation of the frame line. The frame expansion/contraction commanding means is constituted of the frame expansion key 20, the frame contraction key 22 and the CPU 32 for executing the processings for expansion and contraction of the frame line. The expansion/contraction processing means is constituted of a memory area of the program memory 46 that stores the steps S2 - S11 and S12 - S25, and the CPU 32 for executing these steps.

Although the frame line to be moved for expansion or contraction of the frame includes all the outermost vertical and horizontal frame lines in the above-mentioned preferred embodiment, the above program may be modified in such a manner that the upper horizontal frame line and the leftmost vertical frame line are fixed, and the lowermost horizontal frame line and the rightmost vertical frame line are moved.

Further, the frame line to be moved for expansion or contraction of the frame is not limited to the outermost vertical and horizontal frame lines, but inside vertical and horizontal frame lines formed inside the frame may be designated by the cursor as shown in Figs. 16 and 17.

Additionally, the direction of movement of the frame line is not limited to the direction perpendicular to the longitudinal direction of the frame line, but the frame line may be moved in any other directions.

## Claims

1. A frame processing system capable of expanding and contracting a frame consisting of horizontal and vertical frame lines, the system comprising:
a display device (21) having a screen (6) for displaying said frame;
frame expansion/contraction commanding means (20, 22) responsive to a user for commanding expansion or contraction of said frame;
frame line designating means responsive to a user for designating a frame line to be moved on said screen for expansion or contraction of said frame, comprising a cursor to be displayed on said screen and a cursor key for moving said cursor; and
expansion/contraction processing means for moving the designated frame line in a direction different than the longitudinal direction of said designated frame line without changing the length thereof when a command for expansion or contraction of said frame is supplied from said frame expansion/contraction commanding means to said expansion/contraction processing means, and automatically expanding or contracting other frame lines connected to said designated frame line so as to expand or contract an area inside said frame and adjacent to said designated frame line;
wherein said expansion/contraction processing means comprises a central processing unit, a ROM including a program memory storing a control program which controls expansion and contraction of said frame, and a RAM including a frame line memory means for storing vertical and horizontal frame line data indicative of the position of vertical and horizontal frame lines.

2. A frame processing system according to claim 1, wherein said designated frame line is moved per column or line in a direction perpendicular to a longitudinal direction of said designated frame line.

3. A frame processing system according to claim 1 or 2, wherein said designated frame line comprises vertical and horizontal frame lines to be simultaneously moved per column and per line, respectively.

4. A frame processing system according to claim 1, 2 or 3, wherein said frame expansion/contraction commanding means comprises a frame expansion key for commanding expansion of said frame and a frame contraction key for commanding contraction of said frame.

5. A text processing system, such as a word processor or typewriter, including a frame processing system according to any one of the preceding claims.

## Patentansprüche

1. Rahmenverarbeitungssystem, das zum Erweitern und Zusammenziehen eines Rahmens, der aus horizontalen und vertikalen Rahmenlinien besteht, in der Lage ist, wobei das System aufweist:
eine Anzeigevorrichtung (21) mit einem Schirm (6) zum Darstellen des Rahmens;
einer Rahmen-Erweiterungs/Zusammenziehungs-Befehlseinrichtung (20, 22), die auf einen Benutzer antwortet, zum Befehlen der Erweiterung oder Zusammenziehung des Rahmens;
einer Rahmenlinienbestimmungseinrichtung, die auf einen Benutzer antwortet, zum Bestimmen einer auf dem Schirm zur Erweiterung oder Zusammenziehung des Rahmens zu bewegenden Rahmenlinie mit einer auf dem Schirm darzustellenden Bildmarke und einer Bildmarkentaste zum Bewegen der Bildmarke; und
einer Erweiterungs/Zusammenziehungs-Verarbeitungseinrichtung zum Bewegen der bestimmten Rahmenlinie in einer Richtung, die unterschiedlich von der Längsrichtung der bestimmten Rahmenlinie ist, ohne Änderung der Länge derselben, wenn ein Befehl zum Erweitern oder Zusammenziehen des Rahmens von der Rahmen-Erweiterungs/Zusammenziehungs-Befehlseinrichtung zu der Erweiterungs/Zusammenziehungs-Verarbeitungseinrichtung zugeführt wird, und zum automatischen Erweitern oder Zusammenziehen anderer Rahmenlinien, die mit der bestimmten Rahmenlinie verbunden sind, um so eine Fläche, die innerhalb des Rahmens und benachbart zu der bestimmten Rahmenlinie ist, zu erweitern oder zusammenzuziehen;
wobei die Erweiterungs/Zusammenziehungs-Verarbeitungseinrichtung eine zentrale Prozessoreinheit, einen ROM mit einem Programmspeicher, der ein Steuerprogramm speichert, das die Erweiterung und die Zusammenziehung des Rahmens steuert, und einen RAM mit einer Rahmenlinien-Speichereinrichtung zum Speichern von vertikalen und horizontalen Rahmenliniendaten, die die Position von vertikalen und horizontalen Rahmenlinien anzeigen, aufweist.

2. Rahmenverarbeitungssystem nach Anspruch 1, bei dem die bestimmte Rahmenlinie in einer zu der Längsrichtung der bestimmten Rahmenlinie senkrechten Richtung pro Spalte oder Zeile bewegt wird.

3. Rahmenverarbeitungssystem nach Anspruch 1 oder 2, bei dem die bestimmte Rahmenlinie vertikale und horizontale Rahmenlinien aufweist, die gleichzeitig pro Spalte bzw. pro Zeile zu bewegen sind.

4. Rahmenverarbeitungssystem nach Anspruch 1, 2 oder 3, bei dem die Erweiterungs/Zusammenziehungs-Verarbeitungseinrichtung eine Rahmenerweiterungstaste zum Befehlen der Erweiterung des Rahmens und eine Rahmenzusammenziehungstaste zum Befehlen der Zusammenziehung des Rahmens aufweist.

5. Textautomat wie ein Textverarbeitungssystem oder eine Schreibmaschine mit einem Rahmenverarbeitungssystem nach einem der vorhergehenden Ansprüche.

## Revendications

1. Système de traitement de champs capable d'élargir et de diminuer un champ constitué de lignes de champ horizontales et verticales, le système comprenant :
un dispositif d'affichage (21) ayant un écran (6) pour afficher ledit champ ;
un moyen de commande d'élargissement/diminution de champ (20, 22) sensible à un utilisateur pour commander l'élargissement ou la diminution dudit champ ;
un moyen de désignation de ligne de champ sensible à un utilisateur pour désigner une ligne de champ à déplacer sur ledit écran pour l'élargissement ou la diminution dudit champ, comprenant un curseur à afficher sur ledit écran et une touche de curseur pour déplacer ledit curseur ; et
un moyen de traitement d'élargissement/diminution pour déplacer la ligne de champ désignée dans une direction différente de la direction longitudinale de ladite ligne de champ désignée sans changer la longueur de ce dernier quand une commande pour l'élargissement ou la diminution dudit champ est délivrée, en provenance dudit moyen de commande d'élargissement/diminution de champ, audit moyen de traitement d'élargissement/diminution de champ, et pour élargir ou diminuer automatiquement les autres lignes de champ reliées à ladite ligne de champ désignée de façon à élargir ou diminuer une surface à l'intérieur dudit champ et adjacentes à ladite ligne de champ désignée ;
dans lequel ledit moyen de traitement d'élargissement/diminution comprend une unité centrale de traitement, une ROM (mémoire morte) incluant une mémoire de programme stockant un programme de commande qui commande l'élargissement et la diminution dudit champ, et une RAM (mémoie vive) incluant un moyen formant mémoire de ligne de champ pour stocker des données de lignes de champ horizontales et verticales indicatives de la position des lignes de champ horizontales et verticales.

2. Système de traitement de champs selon la revendication 1, dans lequel ladite ligne de champ désignée est déplacée par colonne ou par ligne dans une direction perpendiculaire à une direction longitudinale de ladite ligne de champ désignée.

3. Système de traitement de champs selon la revendication 1 ou 2, dans lequel ladite ligne de champ désignée comprend des lignes de champ verticales et horizontales à déplacer respectivement en même temps par colonne et par ligne.

4. Système de traitement de champs selon la revendication 1, 2 ou 3, dans lequel ledit moyen de commande d'élargissement/diminution de champ comprend une touche d'élargissement de champ pour commander l'élargissement dudit champ et une touche de diminution de champ pour commander la diminution dudit champ.

5. Système de traitement de textes, tel qu'une machine de traitement de textes ou machine à écrire, incluant un système de traitement de champs selon l'une quelconque des revendications précédentes.
